# EUROPEAN PATENT SPECIFICATION

(11) **EP 3 346 116 B1**
(45) Date of publication and mention of the grant of the patent: **25.08.2021**
(21) Application number: 17210494.5
(22) Date of filing: 22.12.2017
(51) Int. Cl.: F02D 33/02, F01N 3/20, F02D 41/02, F02D 13/02, F02D 13/06, F02D 21/08, F02M 26/05, F02M 26/25, F02M 26/33, F02D 41/00, F01N 11/00, F02D 41/12, F02D 13/04

(54) **PERFORMING A WARM UP OF AN EXHAUST GAS AFTERTREATMENT SYSTEM OF AN INTERNAL COMBUSTION ENGINE**
DURCHFÜHREN DES AUFWÄRMENS EINES ABGASNACHBEHANDLUNGSSYSTEMS EINER BRENNKRAFTMASCHINE
EFFECTUER L'ÉCHAUFFEMENT D'UN SYSTÈME DE POST-TRAITEMENT D'ÉCHAPPEMENT D'UN MOTEUR À COMBUSTION INTERNE

(30) Priority: 23.12.2016 IT 201600130806
(43) Date of publication of application: 11.07.2018
(73) Proprietor: FPT Motorenforschung AG, 9320 Arbon (CH)
(72) Inventor: MAIER, Christian, 9320 ARBON (CH)
(74) Representative: Faraldi, Marco

(56) References cited:
- EP-A1- 2 418 369
- EP-A1- 2 508 737
- EP-A1- 3 115 581
- GB-A- 2 394 750
- US-A1- 2003 089 330
- US-A1- 2007 089 400
- US-A1- 2007 214 772
- US-A1- 2015 135 680

## Description

### PRIORITY CLAIM

This application claims priority from Italian Patent Application No. nr. 102016000130806 filed on December 23, 2016.

### Field of the invention

The present invention relates to field of the methods and devices for operating an internal combustion engine having an after-treatment system arranged to treat exhaust gasses from the internal combustion engine. The after-treatment system (ATS) may comprise a Selective catalytic reduction (SCR) for the reduction of the NOx emissions and/or a Diesel Particulate Filter (DPF) and/or an oxidation catalyst (DOC) and/or a cleanup catalyst (CUC).

### Description of the prior art

Internal combustion engines and diesel engines in particular, often include an after-treatment system for treating exhaust gas from the engine.

In order for the ATS to correctly treat the exhaust gases, it must be heated up to the light-off temperature, usually 250°C, of the SCR catalyst.

Similarly, the DPF regeneration procedure needs to reach a minimum suitable temperature to function properly. In general, these techniques lead to an increase of the ATS temperature.

Therefore, the engine ECUs are programmed to cause a fuel injection amount increasing from a normal amount until the ATS reaches the working temperature, for example through the so-called post injections.

Other techniques have been developed in order to heat up the ATS temperature, for example, by decreasing lambda via intake flap, or by increasing pumping work via exhaust flaps, or by shifting the start of injection SOI towards ATDC, namely after top dead center.

A common result of any of these techniques is the dismissal of the optimal engine working point by increasing the backpressure at the exhaust line.

The most implemented technique is based on a flap arranged on the exhaust line, suitable to increase the pumping losses. However, this solution is highly dissipative due to the huge amount of energy lost in pumping work.

Despite, the aim is to reach a better ATS working temperature leading, in turn, to a better working condition of the overall system comprising the combustion engine and the ATS, during these heat-up periods, a high amount of fuel is burnt and additional pollution may be produced for both the high amount of fuel burnt and the low efficiency of the ATS.

Emission regulations are becoming more and more rigid, thus also in the first phases of cold engine activation, the emissions should be reduced.

Relevant prior art employing measures to increase ATS temperature, such measures including partial cylinder operation, intake air restriction, variable valve timing adjustment and exhaust gas recirculation control, is, for example, known from documents US 2015/135680 A1, US 2007/214772 A1 and EP 2 418 369 A1.

### Summary of the invention

The main object of the present invention is to provide a method for performing an after-treatment system warm up which overcomes the above problems/drawbacks. This is achieved by the features of appended claim 1 and further independent claim 4.

In particular, the aim is to vary the load and thus the working point of the internal combustion engine in a less dissipative way than in the known solutions.

The internal combustion engine cylinders are parted into two subsets, where a first subset is active or fired, while the second subset is operated according to an engine brake operation.

The fired/active condition (or mode) means that the respective fuel injectors inject fuel and the air-fuel mixture is burnt in the cylinders.

The engine brake operation is well known in the field of heavy duty internal combustion engines in order to brake a vehicle provided with said internal combustion engines. Such kind of braking is advantageous for heavy duty trucks because permits the vehicle braking without mechanical wear of the conventional brakes.

Such operation condition consists in compressing air in the engine cylinders and to release such air when the corresponding pistons are close to their top dead centers while the corresponding fuel injectors are prevented from injecting fuel in the cylinders. Thus, the subset of cylinders in braking mode is not fired. Indeed the two conditions fired/braked are mutually excluding.

Only a subset of cylinders is turned into engine brake operation while the remaining cylinders are fired.

However, preferably, when the torque requested to the combustion engine exceeds the torque that the fired cylinders can offer, thus, the braked cylinders are switched in fired mode. Nevertheless, additional heating strategies, described below, are implemented.

The driver can operate with low load /low speed and the vehicle does not force him to maintain certain speeds over highways as required for known DPF regeneration problems. The activation of the present technique is subjected to a deciding process.

Preferably, such deciding process is based on a temperature value sensed at or downstream the ATS component to be heated, such as the SCR.

The technical effect achieved is that the fired cylinders working point is shifted to a higher load working point due to the contrasting effect achieved by the braked cylinders. Also the pumping work is converted into heating of the compressed and released air by the braked subset of cylinders. Such hot air is contributed to heat the ATS. These and further objects are achieved by means of the attached claims.

### Brief description of the drawings

The invention will become fully clear from the following detailed description, given by way of a mere exemplifying and non limiting example, to be read with reference to the attached drawing figures, wherein:
- Fig. 1 shows an internal combustion engine implementing the present strategy to warm up and ATS catalyst;
- Fig. 2 shows a lateral view of the internal combustion engine of figure 1.

The same reference numerals and letters in the figures designate the same or functionally equivalent parts.

According to the present invention, the term "second element" does not imply the presence of a "first element", first, second, etc. are used only for improving the clarity of the description and they should not be interpreted in a limiting way.

### Detailed description of the preferred embodiments

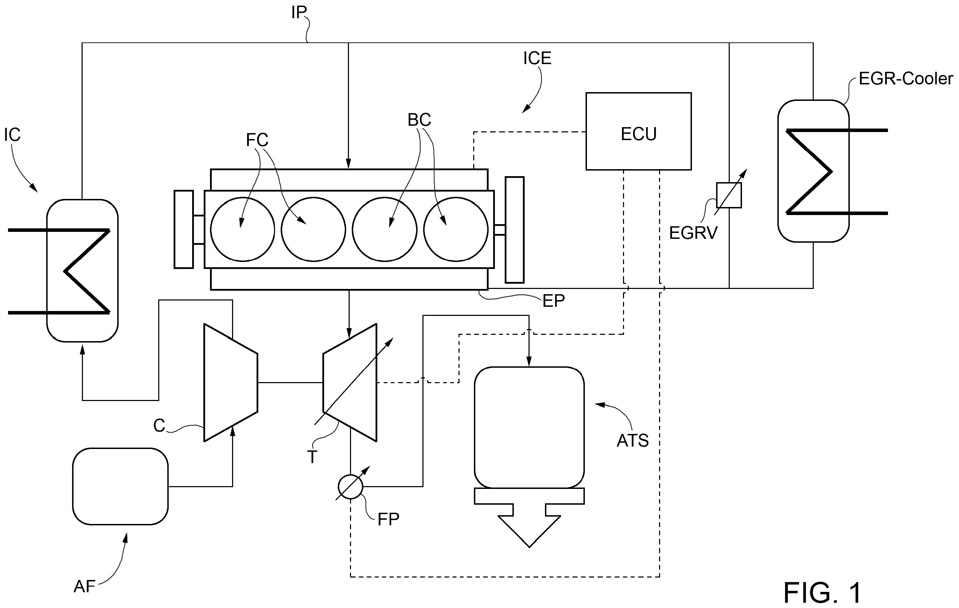

Figure 1 discloses an internal combustion engine ICE comprising four cylinders CL. However, a different number of cylinders can be conceived. In addition, the cylinders can be distributed in a V configuration.

The ICE comprises an inlet line IP and an exhaust line EP. A turbocharger TC is coupled with the ICE to boost the latter.

The turbocharger TC comprises a turbine T, preferably of variable geometry type VTG, arranged on the exhaust line. The turbine drives a compressor C arranged on the inlet line IP.

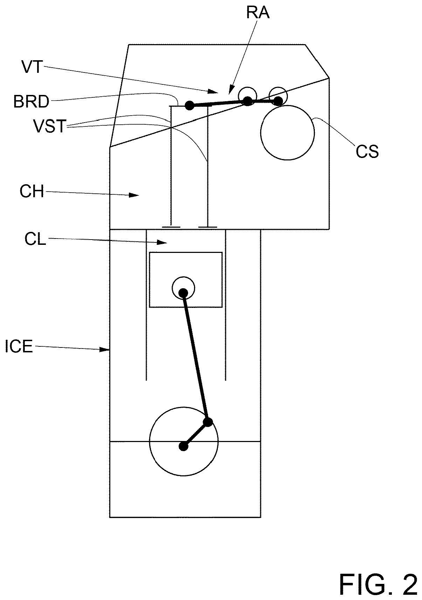

An air filter AF is arranged upstream the compressor and an intercooler IC is arranged downstream the compressor so that the fresh air sucked by the ambient is first filtered, then compressed and then cooled by the intercooler before entering in the engine head CH, see figure 2.

Downstream the turbine is arranged an after treatment system comprising at least a component needing to be heated to be operative for abating the pollutants contained in the exhaust gasses produced by the ICE.

An electronic control unit ECU controls the internal combustion engine and preferably also the geometry of the turbine.

The internal combustion engine has a valve train VT comprising a cam shaft CS commanding the swinging of a rocker arm RA, which pushes one or more valve stems VST, for example through a bridge BRD.

Also a finger follower configuration can be conceived.

In particular, the internal combustion engine is of the heavy duty type, preferably implementing a diesel cycle.

The internal combustion engine compresses engine braking means, namely means for varying the valve opening timing.

According to said braking operation of the engine, the exhaust valve (s) is commanded to open when a piston is close to its top dead center. In this way, the energy accumulated in the air compressed by the piston P is released in the ambient by avoiding the air from returning such energy as kinetic motion for the piston.

In other words, the engine brake operation does not relate to simple pumping fresh air from the intake line to the exhaust line. Instead the piston compresses air and the latter is released suddenly, decompression, by maximizing the negative work offered by the braking operation.

The opening of the exhaust valve is carried out at the top dead center or immediately after it, namely at the start of the expansion stroke.

An example of engine brake operation is given in EP1927735 or EP3004575 (B1).

The latter document discloses a so called "Two Stroke Engine Brake", due to the fact that the four stroke ICE behaves as a two stroke engine.

Generally, the sudden release of the compressed air is obtained through the activation of dedicated hump on a camshaft commanding the rocker arm RA or finger follower. The ICE cylinders define a first subset of cylinders FC, fired during the cold starting of the ICE, while the remaining cylinders define a second subset operated in engine brake mode during said cold starting of the ICE. Therefore, a first subset of the ICE is operated in firing mode, thus the corresponding fuel injectors work normally, while the second half is in braking mode, thus the corresponding fuel injectors are prevented from injecting fuel in the corresponding cylinders.

The braking effect achieved by the second subset of cylinders BC does not impact in a relevant way the drivers or vehicle power demand.

It is clear that the valve trains of the two subset of cylinders can be controlled selectively. Therefore, "real" or "conventional" engine braking, namely when the vehicle needs to be braked, one or both the valve trains are commanded to implement an engine brake strategy, while all the injectors of both subsets are prevented to inject fuel in the respective cylinders.

The subdivision between the two subsets can be varied as a function of the driving torque requested to the internal combustion engine. In other words, as the requested driving torque increases an individual cylinder at a time switches from the braking mode to the fired mode. This offers a good driving handling of the vehicle. Thus the driver does not realize that some cylinders are in braking mode operation. Thanks to the present invention, standard methods like SOI start of injection shift, see above, and throttling via exhaust or intake Flap can be avoided. However, the exhaust flap FP is still needed for the "real" or "conventional" engine brake operation mode at full braking power to control the turbocharger speed.

Indeed, especially when a Two Stroke Brake is implemented, the present invention it is very powerful, the usually requested 250°C at the SCR can be achieved a low BMEP (Brake Mean Effective Pressure).

During the present warm up strategy, it is preferable to control the VTG boost on the basis of the boost map and not in terms of geometry position or equivalently in terms of effective flow section of the turbine. According to the present invention, also at least one of the fired cylinders' valve trains is subjected to a timing variation according to Miller/Atkinson valve timing at least during ATS warm up strategy.

Such timing variation, as known, leads to a volumetric efficiency reduction of the fired cylinders and results very advantageous for temperature hold after the present warm up strategy. This means that, the implementation of the Miller/Atkinson timing, at least on one subset of the cylinders, can be carried out independently from the warm up operation when one subset of cylinders operates in braking mode while the other is fired.

Thus, at least the first subset of cylinders intended to be fired during ATS warm up, can have a valve train capable to switch through a "normal" timing and a "Miller/Atkinson" timing, implementing the latter during ATS warm up and for temperature hold after warm up. With "normal" timing is meant that a compete and/or correct volumetric filling is obtained of a cylinder.

However, the ICE could also offer a full engine brake, namely the valve trains of all the cylinders can be turned into the engine brake operation. Thus, the first subset of cylinders intended to be fired during ATS warm up, can have a valve train capable to switch through a "normal" timing, an engine brake timing and a "Miller/Atkinson" timing, implementing the latter at least during ATS warm up. Furthermore, the intercooler IC is bypassed and the EGR valve EGRV is controlled in order recirculate hot uncooled exhaust gas not to dissipate heat in the ambient air.

Hot EGR is also used as temperature hold method and if required in addition during the present warm up procedure or in a temperature hold after warm up procedure.

The EGR control, beyond the NOx control can be managed in combination with the present warm up procedure and thus in combination with the above "Miller/Atkinson" timing. When the ATS is already working, but the engine load drops and the ATS temperature too, the
- hot EGR recirculation and the
- "Miller/Atkinson" timing strategies are carried out. However, if the temperature of the ATS continues to drop, the engine restarts the warm up procedure with the first subset of cylinders fired and the second subset of cylinders braked.

Preferably, such "secondary strategies" - Miller/Atkinson and/or uncooled EGR recirculation increase - are carried out when the temperature of the ATS ranges 30°C - 50°C over the light off temperature of the ATS components, that for the SCR is usually about 250°C.

It should be clear that the partitioning of the internal combustion engine is varied according to the circumstances. For example, half cylinders are fired and half cylinders are in braking mode. However, the partitioning is varied in a dynamic way on the basis of the ATS temperature. For example a 6 cylinders engine could have 3 or 4 cylinder fired, while the remaining 3 or 2 are in engine brake mode, where 3 or 4 is selected on the basis of the ATS temperature and preferably the driving torque requested to the combustion engine.

Obviously, each of the two subsets is not empty, thus a subset contains at least one cylinder and the other subset contains the remaining cylinders, thus the two subsets are mutually complementary in number.

Many changes, modifications, variations and other uses and applications of the subject invention will become apparent to those skilled in the art after considering the specification and the accompanying drawings which disclose preferred embodiments thereof. Regarding such changes, modifications, variations and other uses and applications, the invention is limited by the scope of the appended claims.

Further implementation details will not be described, as the man skilled in the art is able to carry out the invention starting from the teaching of the above description.

## Claims

1. Method for performing a warm up of an After Treatment System (ATS) of an internal combustion engine (ICE), the internal combustion engine comprising an inlet line (IP) and an outlet line (EP) and said ATS is arranged on said outlet line, wherein the internal combustion engine (ICE) further comprises at least three cylinders and respective valve trains (VT), each valve train arranged to manage a valve opening timing, wherein said at least three cylinders are partitioned into a first subset and a second subset (FC, BC) of cylinders, wherein the internal combustion engine is provided with Exhaust Gas Recirculation (EGR) means suitable to redirect exhaust gasses from the outlet line (EP) to the inlet line (IP) and EGR cooling means to cool said redirected gasses and wherein said EGR cooling means comprises bypass means (EGRV) arranged to bypass said EGR cooling means as a response to an ATS warm up request; the method comprising
- a first procedure to turn in fired mode said first subset (FC) of cylinders and, at the same time, to turn in braking mode said second subset of cylinders (BC) as a response to said ATS warm up request wherein said subdivision between said first and said second subsets is function of a current ATS temperature,
and wherein in said braking mode, an exhaust valve of a respective cylinder (BC) is commanded to open when a respective piston is close to its top dead center,
- a second procedure wherein at least one of the valve trains of said first subset (FC) of cylinders is adjusted to carry out a Miller/Atkinson cycle, and
- a third procedure wherein uncooled EGR recirculation is carried out,
wherein, when said ATS is already working and an engine load and the ATS temperature drop, the second and the third procedure are carried out, and if the ATS temperature continues to drop, the first procedure is restarted.

2. Method according to claim 1, wherein said second and third procedures are carried out when the temperature of said ATS ranges 30°C to 50°C over the light off temperature of the components of said ATS.

3. Method according to claim 1 or 2, wherein, in accordance with the third procedure, said EGR means are arranged to recirculate an amount of exhaust gasses on the basis of an operative parameter as a response to said ATS warm up request.

4. Internal combustion engine (ICE) comprising an inlet line (IP) and an outlet line (EP) and an after treatment system (ATS) arranged on said outlet line, wherein the ICE further comprises at least three cylinders and respective valve trains (VT), each valve train arranged to manage a valve opening timing, wherein said at least three cylinders are partitioned into a first subset and a second subset (FC, BC) of cylinders, and wherein said first subset (FC) of cylinders has a valve train (VT) suitable to implement a first timing and a second timing wherein, according to said second timing, an amount of air introduced in the corresponding cylinder is lower than an amount of air of said first timing, wherein the ICE comprises control means (ECU) configured to turn in fired mode said first subset (FC) of cylinders and, at the same time, to turn in braking mode said second subset of cylinders (BC) as a response to an ATS warm up request by varying said subdivision between said first and second subsets as a function of a current ATS temperature and wherein said control means are configured to execute all the steps of any one of claims 1 to 3;
an exhaust valve of a respective cylinder (BC) being commanded to open, in use, when a respective piston is close to its top dead center, in said braking mode;
said internal combustion engine (ICE) being provided with EGR means suitable to redirect exhaust gasses from the outlet line (OP) to the inlet line (IL) and EGR cooling means to cool said redirected gasses and wherein said EGR cooling means comprises bypass means (EGRV) arranged to bypass said EGR cooling means as a response to said ATS warm up request.

5. Internal combustion engine according to claim 4, wherein said control unit is further arranged to activate first said exhaust gas recirculation and said second timing when the ATS temperature approaches a predetermined temperature threshold and then, if said ATS temperature reaches said predetermined temperature threshold, to turn in braking mode said second subset of cylinders (BC).

6. Internal combustion engine according to claims 4 or 5, further comprising a turbocharger (TC) comprising a turbine (T) arranged on said outlet line and a compressor (C) arranged on said inlet line, wherein the turbine is arranged to drive in rotation said compressor.

7. Heavy duty vehicle provided with an internal combustion engine (ICE) according to any of previous claims 4 to 6.

## Patentansprüche

1. Verfahren zum Durchführen eines Aufwärmens eines Nachbehandlungssystems (ATS) einer Brennkraftmaschine (ICE), wobei die Brennkraftmaschine eine Einlassleitung (IP) und eine Auslassleitung (EP) umfasst und das ATS an der Auslassleitung angeordnet ist, die Brennkraftmaschine (ICE) ferner mindestens drei Zylinder und jeweilige Ventiltriebe (VT) umfasst, jeder Ventiltrieb ausgelegt ist, einen Ventilöffnungszeitpunkt zu managen, die mindestens drei Zylinder in eine erste Untermenge und eine zweite Untermenge (FC, BC) von Zylindern unterteilt sind, die Brennkraftmaschine mit Abgasrückführungsmitteln (AGR-Mitteln), die zum Umleiten von Abgasen von der Auslassleitung (EP) zur Einlassleitung (IP) geeignet sind, und AGR-Kühlmitteln, um die umgeleiteten Gase zu kühlen, versehen ist, das AGR-Kühlmittel Umgehungsmittel (AGRV) umfasst, die ausgelegt sind, das AGR-Kühlmittel als Antwort auf einer ATS-Aufwärmanforderung zu umgehen; und das Verfahren Folgendes umfasst:
- eine erste Prozedur, um als Antwort auf die ATS-Aufwärmanforderung die erste Untermenge (FC) von Zylindern in einen gezündeten Modus zu versetzen und gleichzeitig die zweite Untermenge (BC) von Zylindern in einen Bremsmodus zu versetzen, wobei die Unterteilung zwischen der ersten und der zweiten Untermenge eine Funktion einer aktuellen ATS-Temperatur ist und im Bremsmodus ein Auslassventil eines jeweiligen Zylinders (BC) angewiesen wird, zu öffnen, wenn ein jeweiliger Kolben in der Nähe seines oberen Totpunkts ist,
- eine zweite Prozedur, in der mindestens einer der Ventiltriebe der ersten Untermenge (FC) von Zylindern eingestellt ist, einen Miller/Atkinson-Arbeitszyklus auszuführen, und
- eine dritte Prozedur, in der eine ungekühlte AGR-Rezirkulation ausgeführt wird, wobei
dann, wenn das ATS bereits arbeitet und eine Kraftmaschinenlast und die ATS-Temperatur fallen, die zweite und die dritte Prozedur ausgeführt werden und dann, wenn die ATS-Temperatur weiter fällt, die erste Prozedur neu gestartet wird.

2. Verfahren nach Anspruch 1, wobei die zweite und die dritte Prozedur ausgeführt werden, wenn sich die Temperatur des ATS im Bereich von 30 °C bis 50 °C über der Anspringtemperatur der Komponenten des ATS bewegt.

3. Verfahren nach Anspruch 1 oder 2, wobei in Übereinstimmung mit der dritten Prozedur die AGR-Mittel derart ausgelegt sind, dass sie als Antwort auf die ATS-Aufwärmanforderung auf der Grundlage eines Betriebsparameters eine Menge von Abgasen wieder in Umlauf bringen.

4. Brennkraftmaschine (ICE), die eine Einlassleitung (IP) und eine Auslassleitung (EP) sowie ein Nachbehandlungssystem (ATS), das an der Auslassleitung angeordnet ist, umfasst, wobei die ICE ferner mindestens drei Zylinder und jeweilige Ventiltriebe (VT) umfasst, jeder Ventiltrieb ausgelegt ist, einen Ventilöffnungszeitpunkt zu managen, die mindestens drei Zylinder in eine erste Untermenge und eine zweite Untermenge (FC, BC) von Zylindern unterteilt sind, die erste Untermenge (FC) von Zylindern einen Ventiltrieb (VT) besitzt, der geeignet ist, einen ersten Zeitablauf und einen zweiten Zeitablauf zu implementieren, gemäß dem zweiten Zeitablauf eine Luftmenge, die in den entsprechenden Zylinder eingeleitet wird, kleiner als eine Luftmenge des ersten Zeitablaufs ist, die ICE Steuermittel (ECU) umfasst, die konfiguriert sind, als Antwort auf die ATS-Aufwärmanforderung die erste Untermenge (FC) von Zylindern in einen gezündeten Modus zu versetzen und gleichzeitig die zweite Untermenge (BC) von Zylindern in einen Bremsmodus zu versetzen, indem die Unterteilung zwischen der ersten und der zweiten Untermenge als eine Funktion einer aktuellen ATS-Temperatur variiert wird, und die Steuermittel konfiguriert sind, alle Schritte nach einem der Ansprüche 1 bis 3 auszuführen; wobei
im Bremsmodus ein Auslassventil eines jeweiligen Zylinders (BC) angewiesen wird, im Betrieb dann zu öffnen, wenn ein jeweiliger Kolben in der Nähe seines oberen Totpunkts ist; und
die Brennkraftmaschine (ICE) mit AGR-Mitteln, die zum Umleiten von Abgasen von der Auslassleitung (OP) zur Einlassleitung (IL) geeignet sind, und AGR-Kühlmitteln, um die umgeleiteten Gase zu kühlen, versehen ist und das AGR-Kühlmittel Umgehungsmittel (AGRV) umfasst, die ausgelegt sind, das AGR-Kühlmittel als Antwort auf die ATS-Aufwärmanforderung zu umgehen.

5. Brennkraftmaschine nach Anspruch 4, wobei die Steuereinheit ferner ausgelegt ist, zunächst die Abgasrückführung und den zweiten Zeitablauf zu aktivieren, wenn sich die ATS-Temperatur einem vorgegebenen Temperaturschwellenwert nähert, und dann, wenn die ATS-Temperatur den vorgegebenen Temperaturschwellenwert erreicht, die zweite Untermenge (BC) von Zylindern in einen Bremsmodus zu versetzen.

6. Brennkraftmaschine nach Anspruch 4 oder 5, die ferner einen Turbolader (TC) umfasst, der eine Turbine (T), die an der Auslassleitung angeordnet ist, und einen Kompressor (C), der an der Einlassleitung angeordnet ist, umfasst, wobei die Turbine ausgelegt ist, den Kompressor rotatorisch anzutreiben.

7. Schweres Nutzfahrzeug, das mit einer Brennkraftmaschine (ICE) nach einem der vorhergehenden Ansprüche 4 bis 6 versehen ist.

## Revendications

1. Procédé pour réaliser un échauffement d'un système post-traitement (ATS) d'un moteur à combustion interne (ICE), le moteur à combustion interne comprenant une conduite d'entrée (IP) et une conduite de sortie (EP) et ledit ATS est agencé sur ladite conduite de sortie, dans lequel le moteur à combustion interne (ICE) comprend en outre au moins trois cylindres et des dispositifs de commande de soupapes (VT) respectifs, chaque dispositif de commande de soupapes étant agencé pour gérer un temps d'ouverture de soupape, dans lequel lesdits au moins trois cylindres sont séparés en un premier sous-ensemble et en un second sous-ensemble (FC, BC) de cylindres,
dans lequel le moteur à combustion interne est prévu avec un moyen de recirculation de gaz d'échappement (EGR) approprié pour rediriger les gaz d'échappement de la conduite de sortie (EP) à la conduite d'entrée (IP) et un moyen de refroidissement de EGR pour refroidir lesdits gaz redirigés et dans lequel ledit moyen de refroidissement de EGR comprend un moyen de dérivation (EGRV) agencé pour dériver ledit moyen de refroidissement de EGR en réponse à une demande d'échauffement de ATS ;
le procédé comprenant :
une première procédure pour faire tourner en mode d'allumage ledit premier sous-ensemble (FC) de cylindres et en même temps, pour faire tourner en mode de freinage ledit second sous-ensemble de cylindres (BC) en réponse à ladite demande d'échauffement de ATS, dans lequel ladite division entre ledit premier et ledit second sous-ensemble dépend d'une température de ATS courante,
et dans lequel dans ledit mode de freinage, une soupape d'échappement d'un cylindre (BC) respectif est commandée pour s'ouvrir lorsqu'un piston respectif est à proximité de son point mort haut,
une deuxième procédure dans laquelle au moins l'un des dispositifs de commande de soupapes dudit premier sous-ensemble (FC) de cylindres est ajusté pour réaliser un cycle de Miller/Atkinson, et
une troisième procédure dans laquelle la recirculation de EGR non refroidi est réalisée,
dans lequel, lorsque ledit ATS fonctionne déjà et qu'une charge de moteur et la température de ATS chutent, on réalise la deuxième et la troisième procédures, et si la température de ATS continue à chuter, la première procédure est recommencée.

2. Procédé selon la revendication 1, dans lequel lesdites deuxième et troisième procédures sont réalisées lorsque la température dudit ATS va de 30°C à 50°C au-delà de la température de réchauffage des composants dudit ATS.

3. Procédé selon la revendication 1 ou 2, dans lequel, selon la troisième procédure, lesdits moyens de EGR sont agencés pour faire recirculer une quantité de gaz d'échappement sur la base d'un paramètre opérationnel en réponse à ladite demande d'échauffement de ATS.

4. Moteur à combustion interne (ICE) comprenant une conduite d'entrée (IP) et une conduite de sortie (EP) et un système de post-traitement (ATS) agencé sur ladite conduite de sortie, dans lequel le ICE comprend en outre au moins trois cylindres et des dispositifs de commande de soupapes (VT) respectifs, chaque dispositif de commande de soupapes étant agencé pour gérer un temps d'ouverture de soupape, dans lequel lesdits au moins trois cylindres sont séparés en un premier sous-ensemble et en un second sous-ensemble (FC, BC) de cylindres, et dans lequel ledit premier sous-ensemble (FC) de cylindres a un dispositif de commande de soupapes (VT) approprié pour mettre en œuvre un premier réglage de distribution et un second réglage de distribution dans lequel, selon ledit second réglage de distribution, une quantité d'air introduit dans le cylindre correspondant est inférieure à une quantité d'air dudit premier réglage de distribution,
dans lequel le ICE comprend un moyen de commande (ECU) configuré pour faire tourner, en mode d'allumage, ledit premier sous-ensemble (FC) de cylindres et en même temps, pour faire tourner en mode de freinage, ledit second sous-ensemble de cylindres (BC), en réponse à une demande d'échauffement de ATS en modifiant ladite division entre lesdits premier et second sous-ensembles en fonction d'une température de ATS courante et dans lequel lesdits moyens de commande sont configurés pour exécuter toutes les étapes selon l'une quelconque des revendications 1 à 3 ;
une soupape d'échappement d'un cylindre (BC) respectif étant commandée pour s'ouvrir, à l'usage, lorsqu'un piston respectif est à proximité de son point mort haut, dans ledit mode de freinage ;
ledit moteur à combustion interne (ICE) étant prévu avec un moyen de EGR approprié pour rediriger les gaz d'échappement de la conduite de sortie (OP) à la conduite d'entrée (IL) et un moyen de refroidissement de EGR pour refroidir lesdits gaz redirigés et dans lequel ledit moyen de refroidissement de EGR comprend un moyen de dérivation (EGRV) agencé pour dériver ledit moyen de refroidissement de EGR en réponse à ladite demande d'échauffement de ATS.

5. Moteur à combustion interne selon la revendication 4, dans lequel ladite unité de commande est en outre agencée pour activer dans un premier temps ladite recirculation de gaz d'échappement et ledit second réglage de distribution lorsque la température de ATS s'approche d'un seuil de température prédéterminé et ensuite, si ladite température de ATS atteint ledit seuil de température prédéterminé, pour faire tourner, en mode de freinage, ledit second sous-ensemble de cylindres (BC) .

6. Moteur à combustion interne selon les revendications 4 ou 5, comprenant en outre un turbocompresseur (TC) comprenant une turbine (T) agencée sur ladite conduite de sortie et un compresseur (C) agencé sur ladite conduite d'entrée, dans lequel la turbine est agencée pour entraîner en rotation ledit compresseur.

7. Véhicule lourd prévu avec un moteur à combustion interne (ICE) selon l'une quelconque des revendications 4 à 6.
